# EUROPÄISCHE PATENTSCHRIFT

(11) **EP 1 583 895 B1**
(45) Veröffentlichungstag und Bekanntmachung des Hinweises auf die Patenterteilung: **12.03.2008**
(21) Anmeldenummer: 03750475.0
(22) Anmeldetag: 02.09.2003
(51) Int. Cl.: F02F 1/24, F02M 61/14

(54) **ZYLINDERKOPF F R EINE DIREKTEINSPRITZENDE BRENNKRAFTMASCHINE**
CYLINDER HEAD FOR A DIRECT INJECTION INTERNAL COMBUSTION ENGINE
CULASSE DE CYLINDRE POUR MOTEUR A COMBUSTION A INJECTION DIRECTE

(30) Priorität: 30.09.2002 DE 10245853; 04.02.2003 DE 10304392
(43) Veröffentlichungstag der Anmeldung: 12.10.2005
(73) Patentinhaber: FEV Motorentechnik GmbH, 52078 Aachen (DE)
(72) Erfinder: THIEL, Roland, 45259 Essen (DE); KÜSTERS, Andre, 52525 Waldfeucht (DE)
(74) Vertreter: Neumann, Ernst Dieter
(86) Internationale Anmeldenummer: PCT/EP2003/009719
(87) Internationale Veröffentlichungsnummer: WO 2004/031562

(56) Entgegenhaltungen:
- EP-A- 0 735 267
- EP-A- 0 821 155
- EP-A- 1 134 407
- US-A- 3 527 263
- US-A- 3 945 353

## Beschreibung

Die Erfindung betrifft einen Zylinderkopf für eine direkteinspritzende Brennkraftmaschine, der eine zwischen zwei Nockenwellen stehend angeordnete Kraftstoffeinspritzdüse aufweist, mit einer Zylinderkopfhaube, die eine Durchtrittsöffnung zum Einsetzen der Kraftstoffeinspritzdüse umfaßt, einem bodenseitigen Sitz für die Kraftstoffeinspritzdüse und einer sich von der Durchtrittsöffnung bis zum Zylinderkopfboden erstreckenden, die Kraftstoffeinspritzdüse umschließenden Dichthülse.

Zur Befestigung einer sich durch einen gattungsgemäßen Zylinderkopf erstrekkenden Kraftstoffeinspritzdüse ist aus der DE 196 05 934 C1 ein Bügel bekannt, der ein mittig angeordnetes Langloch zum Aufsetzen auf eine Schulter der eingesetzten Kraftstoffeinspritzdüse aufweist und an beiden Seiten des Langlochs mit dem Zylinderkopf verschraubt ist. Diese Befestigung belegt wegen der beiden Verschraubungen eine unnötig große Oberfläche des Zylinderkopfs und erfordert zwei Schraubenvorrichtungen an dessen Oberfläche, die zum Ausbau der Kraftstoffeinspritzdüse gelöst werden müssen. Ferner werden beim Ausbau der Kraftstoffeinspritzdüse Teile des Zylinderkopfs freigelegt. Dies erfordert erhöhte Sorgfalt bei Wartungsarbeiten, um Verunreinigungen des Zylinderkopfinneren zu vermeiden. Zudem tritt bei einer gegebenenfalls auftretenden Undichtigkeit der Kraftstoffeinspritzdüse Kraftstoff in den Zylinderkopf ein. Hierdurch kommt es zu einer Verdünnung des Öls im Ölkreislauf.

Zur Vermeidung des Kraftstoffeintritts in den Ölkreislauf ist es aus der DE 43 15 233 A1 bekannt, eine Dichthülse um die Kraftstoffeinspritzdüse vorzusehen. Die Befestigung erfolgt über eine im Zylinderkopf angeordnete Spannpratze, die sich auf einer Seite im Zylinderkopf und auf der anderen Seite auf einer Schulter der Dichthülse abstützt und mit dem Zylinderkopf verschraubt wird, um die Dichthülse abdichtend gegen den Zylinderkopfboden zu drücken. Die Kraftstoffeinspritzdüse ist mit einer Schulter in der Dichthülse derart im Eingriff, daß sie gegen einen Sitz im Zylinderkopfboden gedrückt wird. Bei dieser Anordnung ist die Kraftstoffeinspritzdüse nur nach Demontage der Zylinderkopfhaube ausbaubar. Zudem hat die Spannpratze im Zylinderkopf einen großen Platzbedarf.

Aus der EP 0 735 267 B1 ist eine Vorrichtung zur Befestigung einer Einspritzdüse insbesondere am Zylinderkopf einer Brennkraftmaschine bekannt, bei der ein Losflansch auf ein von der Einspritzdüse gesondertes zylinderförmiges Spannelement einwirkt, das vorzugsweise als Druckhülse gestaltet ist. Diese Druckhülse wirkt am flanschfernen Ende mit einer im Außenumfang der Einspritzdüse gesondert anordbaren Spannschulter zusammen. Der Flansch wirkt mittels im Zylinderkopf angeordneter Schraubbolzen vorgespannt auf die Einspritzdüse ein. Erste Muttern auf den Schraubbolzen dienen hierbei der Festlegung einer Abdeckhaube am Zylinderkopf, während zweite Muttern auf den Flansch einwirken.

Aus der EP 0 821 155 B1 ist ein Zylinderkopf einer Brennkraftmaschine mit einer Einspritzdüse bekannt, die von einer gabelförmigen Spannpratze umfaßt und beaufschlagt wird, wobei im Zylinderkopf ein Schraubbolzen zur Fixierung und Vorspannung der Spannpratze und eine Abstützfläche für ein Ende der Spannpratze vorgesehen sind. Einspritzdüse und Spannpratze liegen vollständig unterhalb einer Abdeckhaube des Zylinderkopfes.

Der Erfindung liegt die Aufgabe zugrunde, einen Zylinderkopf für eine direkteinspritzende Brennkraftmaschine der eingangs genannten Art zu schaffen, der eine platzsparende, einfache und wartungsfreundliche Befestigung der Kraftstoffeinspritzdüse ermöglicht und gleichzeitig den Ölkreislauf gegen Kraftstoffverunreinigungen schützt.

Diese Aufgabe wird durch einen Zylinderkopf der vorgenannten Art gelöst, bei welchem ein Zwischenträger vorgesehen ist, die Dichthülse in den Zwischenträger eingepaßt und im Zwischenträger geführt ist, und auf der Zylinderkopfhaube benachbart zur Durchtrittsöffnung eine Spannpratzenaufnahme und eine Abstützfläche für ein Ende einer Spannpratze vorgesehen sind.

Hierbei ist eine Kraftstoffeinspritzdüse in die fest in den Zylinderkopf eingebaute Dichthülse einsteck- und über eine Spannpratze mit der Dichthülse verspannbar. Beim Ein- oder Ausbau der Kraftstoffeinspritzdüse liegen weder Teile des Zylinderkopfes frei, noch muß dieser hierfür geöffnet werden. Es ergibt sich ein erheblich verringerter Wartungsaufwand.

Zudem ist der Ölkreislauf durch die Dichthülsen gegen Kraftstoffverunreinigungen geschützt. Bei Undichtigkeit der Kraftstoffeinspritzdüse wird der Kraftstoff über die Dichthülsen zur Zylinderkopfhaube abgeführt, wo er ablaufen kann, ohne in den Zylinderkopf einzudringen.

In einer Ausführungsform wird die Spannpratze durch eine Hutmutter gespannt. Zum Ausbau der Kraftstoffeinspritzdüse ist daher lediglich eine Schraubverbindung zu lösen.

Es ist ein Zwischenträger vorgesehen, der sowohl mit der Zylinderkopfhaube als auch mit dem Zylinderkopf verbunden sein kann. Die Dichthülsen sind zweckmäßigerweise nur durch den Zwischenträger geführt, so daß die Zylinderkopfhaube beispielsweise für Wartungsarbeiten an anderen Teilen im Inneren des Zylinderkopfs problemlos abgenommen werden kann und lediglich Durchtrittsöffnungen für die Kraftstoffeinspritzdüse aufweist. Vorzugsweise sind Durchtrittsöffnungen im Zwischenträger abgeschrägt, um einen Dichtring oder dgl. einsetzen zu können, der sowohl gegenüber der Dichthülse als auch gegenüber der Zylinderkopfhaube abdichtet.

Die Kraftstoffeinspritzdüse weist zweckmäßigerweise eine umlaufende Schulter auf, auf welche ein beispielsweise gabelförmiges Ende der Spannpratze aufsetzbar ist, um beim Festspannen eine in Richtung auf den Zylinderkopfboden wirkende Kraft auf die Kraftstoffeinspritzdüse auszuüben. Alternativ hierzu können beispielsweise zwei seitliche Schultern oder Taschen vorgesehen sein.

Weitere Ausgestaltungen der Erfindung sind der nachfolgenden Beschreibung und den Unteransprüchen zu entnehmen.

Die Erfindung wird nachstehend anhand von den in den beigefügten Abbildungen dargestellten Ausführungsbeispielen näher erläutert.
Fig. 1 zeigt einen Abschnitt eines Zylinderkopfs im Längsschnitt.
Fig. 2 zeigt den Abschnitt aus Fig. 1 in Draufsicht.
Fig. 3 zeigt einen Schnitt durch eine im Zylinderkopf aus Fig. 1 und 2 montierte Kraftstoffeinspritzdüse.
Fig. 4 zeigt eine weitere Ausführungsform einer Kraftstoffeinspritzdüse.

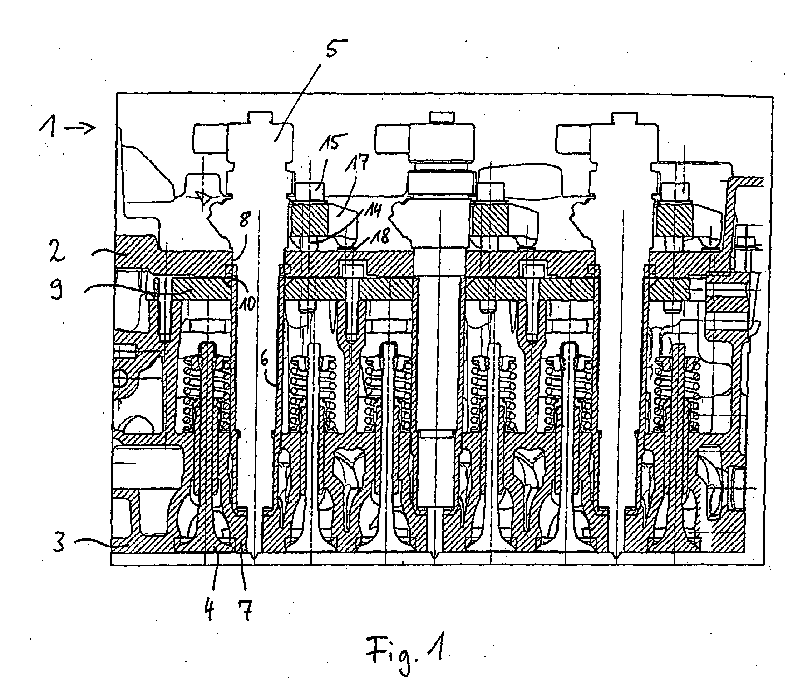

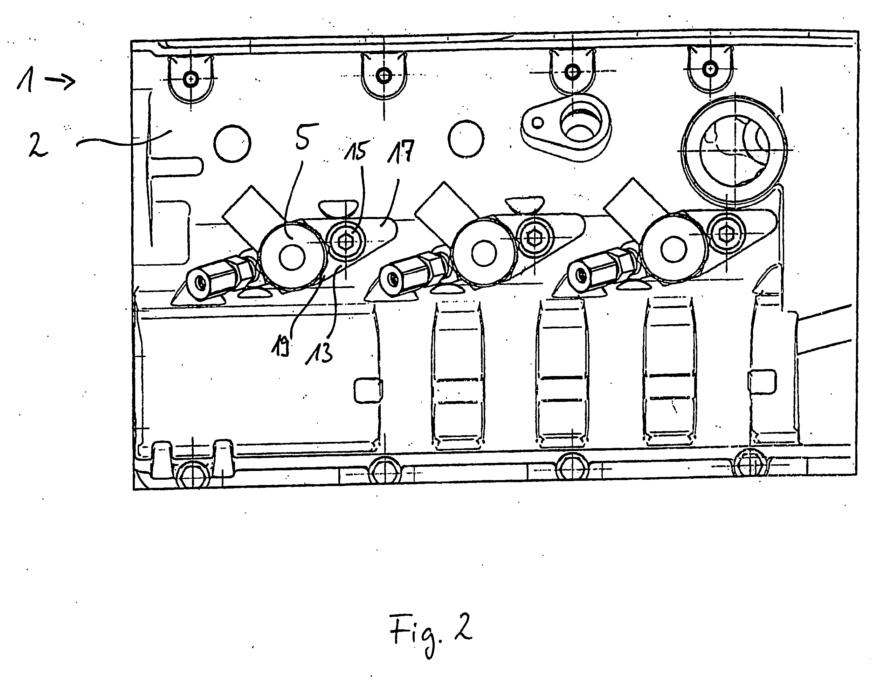

Der in Fig. 1 und 2 gezeigte Abschnitt eines Zylinderkopfs 1 umfaßt eine Zylinderkopfhaube 2, einen Zylinderkopfboden 3, Ventile 4 und stehend zwischen zwei nicht dargestellten, parallel zur Fig. 1 verlaufenden Nockenwellen angeordnete Kraftstoffeinspritzdüsen 5, die in Dichthülsen 6 eingesetzt sind.

Durch die Dichthülsen 6 bilden sich von der Zylinderkopfhaube 2 durch den Zylinderkopf 1 bis zum Zylinderkopfboden 3 erstreckende, gegenüber dem Zylinderkopfinneren abgedichtete Kanäle. Hierzu können die Dichthülsen 6 wie dargestellt in einem Sitz 7 im Zylinderkopfboden 3 abdichtend befestigt sein und sich durch den Zylinderkopf 1 bis zu Durchtrittsöffnungen 8 für die Kraftstoffeinspritzdüsen 5 in der Zylinderkopfhaube 2 erstrecken. Dort sind sie mit der Zylinderkopfhaube 2 oder gegebenenfalls mit einem Zwischenträger 9 kraft- oder formschlüssig verbunden. Hierbei weist eine Durchtrittsöffnung des Zwischenträgers 9 zweckmäßigerweise eine Abschrägung 10 auf, in welche ein Dichtring eingesetzt ist, um den Zwischenträger 9 gegenüber der Zylinderkopfhaube 2 und der Dichthülse 6 abzudichten. Der dargestellte Zwischenträger 9 ist sowohl mit der Zylinderkopfhaube 2 als auch mit dem Zylinderkopf 1 verschraubt.

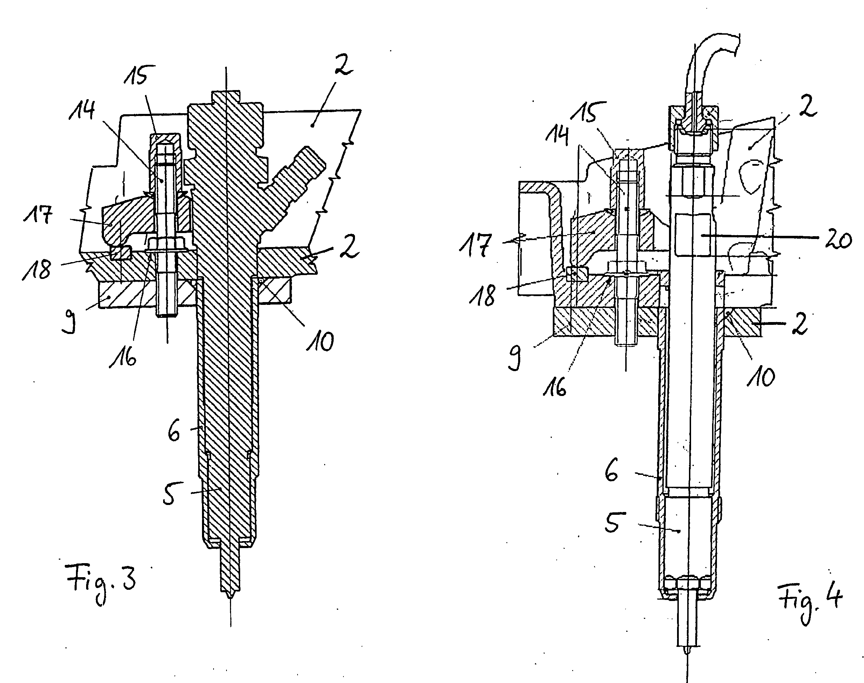

Wie in Fig. 2 und 3 gezeigt werden die Kraftstoffeinspritzdüsen 5 durch eine an der Zylinderkopfhaube 2 angeordnete Spannpratze 13 abdichtend mit der Dichthülse 6 verspannt. Hierzu weist die Zylinderkopfhaube 2 eine Spannpratzenaufnahme auf, die wie dargestellt ein Stift 14 sein kann, der sich durch ein entsprechendes Loch in der Spannpratze 13 erstreckt und an seinem freien Ende ein Gewinde zur Aufnahme einer Hutmutter 15 aufweist. Der Stift 14 kann einstückig mit der Zylinderkopfhaube 2 ausgebildet oder in diese eingesetzt bzw. mit dieser verschraubt sein. Zweckmäßigerweise dient der Stift 14 auch der Verschraubung der Zylinderkopfhaube 2 mit dem Zwischenträger 9. Am Stift 14 kann eine Schraubdichtung 16 vorgesehen sein.

Ein Ende 17 der Spannpratze 13 stützt sich auf einer Abstützfläche 18 auf der Zylinderkopfhaube 2 ab. Ein weiteres Ende 19 ist mit der Kraftstoffeinspritzdüse 5 derart in Eingriff, daß es beim Festdrehen der Hutmutter 15 eine auf den Zylinderkopfboden 3 gerichtete Kraft auf die Kraftstoffeinspritzdüse 5 ausüben kann. Hierzu kann das Ende 19 gabelförmig die Kraftstoffeinspritzdüse 5 umgreifen und auf eine nicht dargestellte, vorzugsweise umlaufende Schulter am freien Ende der Kraftstoffeinspritzdüse 5 drücken. In weiteren Ausgestaltungen sind anstelle der Schulter zwei Auflagen oder Taschen 20 oder dgl. vorgesehen, vgl. Fig. 4. Das Ende 19 kann auch in eine Nut an der Kraftstoffeinspritzdüse 5 eingreifen.

Der zwischen der Kraftstoffeinspritzdüse 5 und der Zylinderkopfhaube 2 verbleibende umlaufende Spalt kann gegen Umwelteinflüsse (z.B. Staub) beispielsweise mit einer Filzdichtung verschlossen werden. Leckagekraftstoff kann durch diese Dichtung austreten und zur Anzeige gebracht werden oder in einer Leckleitung gesammelt und dem Kraftstoffsystem wieder zugeführt werden.

## Patentansprüche

1. Zylinderkopf (1) für eine direkteinspritzende Brennkraftmaschine, der eine zwischen zwei Nockenwellen stehend angeordnete Kraftstoffeinspritzdüse (5) aufweist, mit einer Zylinderkopfhaube (2), die eine Durchtrittsöffnung (8) zum Einsetzen der Kraftstoffeinspritzdüse (5) umfaßt, einem Zylinderkopfboden (3) einem bodenseitigen Sitz für die Kraftstoffeinspritzdüse (5), und mit einer sich von der Durchtrittsöffnung (8) bis zum Zylinderkopfboden (3) erstreckenden, die Kraftstoffeinspritzdüse (5) umschließenden Dichthülse (6), **dadurch gekennzeichnet, daß** ein Zwischenträger (9) vorgesehen ist, die Dichthülse (6) in den Zwischenträger (9) eingepaßt und im Zwischenträger (9) geführt ist, und daß auf der Zylinderkopfhaube (2) benachbart zur Durchtrittsöffnung (8) eine Spannpratzenaufnahme und eine Abstützfläche (18) für ein Ende einer Spannpratze (13) vorgesehen sind.

2. Zylinderkopf nach Anspruch 1, **gekennzeichnet durch** eine sich mit einem Ende (17) an der Abstützfläche (18) abstützende Spannpratze (13).

3. Zylinderkopf nach Anspruch 1 oder 2, **dadurch gekennzeichnet, daß** die Spannpratzenaufnahme ein sich durch die Zylinderkopfhaube (2) erstreckender Stift (14) ist, der an seinem freien Ende ein Gewinde aufweist.

4. Zylinderkopf nach Anspruch 3, **gekennzeichnet durch** eine auf den Stift (14) aufschraubbare Hutmutter (15) zum Verspannen der Spannpratze (13).

5. Zylinderkopf nach einem der Ansprüche 1 bis 4, **dadurch gekennzeichnet, daß** der Zwischenträger (9) mit der Zylinderkopfhaube (2) über die Spannpratzenaufnahme verschraubt ist.

6. Zylinderkopf nach einem der Ansprüche 1 bis 5, **dadurch gekennzeichnet, daß** die Dichthülse (6) gegenüber dem Zwischenträger (9) und/oder der Zylinderkopfhaube (2) abgedichtet ist.

## Claims

1. A cylinder head (1) for a direct injection internal combustion engine, which cylinder head (1) comprises a fuel injection nozzle arranged so as to be in an upright position between two camshafts, having a cylinder head cover (2) which comprises a through-aperture (8) for inserting the fuel injection nozzle (5), having a cylinder head base (3), a seat at the base end for the fuel injection nozzle (5) and having a sealing sleeve (6) which extends from the through-aperture (8) to the cylinder head base (3) and which encloses the fuel injection nozzle,
**characterised in**
**that** there is provided an intermediate carrier (9), that the sealing sleeve (6) fits into the intermediate carrier (9) and is guided in the intermediate carrier (9) and that, on the cylinder head cover (2), neighbouring to the through-aperture (8), there are provided receiving means for a tensioning claw and a supporting face (18) for one end of a tensioning claw (13).

2. A cylinder head according to claim 1,
**characterised by**
a tensioning claw (13) supported by one end (17) on the supporting face (18).

3. A cylinder head according to claim 1 or 2,
**characterised in**
**that** the receiving means of the tensioning claw are provided in the form of a pin (14) which extends through the cylinder head cover (2) and which comprises a thread at its free end.

4. A cylinder head according to claim 3,
**characterised by**
a cap nut (15) which can be threaded on to the pin (14) for tensioning the tensioning claw (13).

5. A cylinder head according to any one of claims 1 to 4,
**characterised in**
**that** the intermediate carrier (9) is threaded to the cylinder head cover (2) via the receiving means for the tensioning claw.

6. A cylinder head according to any one of claims 1 to 5,
**characterised in**
**that** the sealing sleeve (6) is sealed relative to the intermediate carrier (9) and/or relative to the cylinder head cover (2).

## Revendications

1. Culasse (1) pour un moteur à combustion interne à injection directe, qui présente un injecteur de carburant (5) agencé en position verticale entre deux arbres à cames, la culasse comportant un capot supérieur de culasse (2) qui présente une ouverture de passage (8) pour l'insertion de l'injecteur de carburant (5), un fond de culasse (3), un logement de portée dans ce fond pour l'injecteur de carburant (5), et un fourreau d'étanchéité (6) qui s'étend de l'ouverture de passage (8) jusqu'au fond de culasse (3) et entoure l'injecteur de carburant (5), **caractérisée en ce qu'**il est prévu un support intermédiaire (9), le fourreau d'étanchéité (6) étant ajusté dans le support intermédiaire (9) et guidé dans le support intermédiaire (9), et **en ce que** sur le capot supérieur de culasse (2), au voisinage de l'ouverture de passage (8), sont prévus un élément de réception de griffe de serrage et une surface d'appui (18) pour une extrémité d'une griffe de serrage (13).

2. Culasse selon la revendication 1, **caractérisée par** une griffe de serrage (13) qui s'appuie avec une extrémité (17) sur la surface d'appui (18).

3. Culasse selon la revendication 1 ou 2, **caractérisée en ce que** l'élément de réception de griffe de serrage est une goupille (14) qui s'étend à travers le capot supérieur de culasse (2), et présente un filetage à son extrémité libre.

4. Culasse selon la revendication 3, **caractérisée par** un écrou borgne (15) pouvant être vissé sur la goupille (14)pour assurer le serrage de la griffe de serrage (13).

5. Culasse selon l'une des revendications 1 à 4, **caractérisée en ce que** le support intermédiaire (9) est assemblé par vissage au capot supérieur de culasse (2) par l'intermédiaire de l'élément de réception de griffe de serrage.

6. Culasse selon l'une des revendications 1 à 5, **caractérisée en ce que** le fourreau d'étanchéité (6) est étanche par rapport au support intermédiaire (9) et/ou au capot supérieur de culasse (2).
